# EUROPEAN PATENT APPLICATION

(11) **EP 4 765 686 A1**
(43) Date of publication of application: **24.06.2026**
(21) Application number: 23950019.2
(22) Date of filing: 26.08.2023
(51) Int. Cl.: H04B 17/309

(54) **SENSING SERVICE PROCESSING METHOD AND COMMUNICATION APPARATUS**

(71) Applicant: HUAWEI TECHNOLOGIES CO., LTD., Shenzhen 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN)
(74) Representative: Goddar, Heinz J.
(86) International application number: PCT/CN2023/115116
(87) International publication number: WO 2025/043425

(57) **Abstract**

A sensing service processing method and a communication apparatus are provided, so that when there is a large amount of sensing service data in a communication system, the large amount of sensing service data can be processed, thereby helping improve sensing service processing efficiency. The method may include: obtaining a first sensing service identifier; determining a sensing entity pair associated with a sensing service identified by the sensing service identifier, where the sensing entity pair includes a sending sensing entity and a receiving sensing entity; sending a first sensing control message to the sending sensing entity, to indicate the sending sensing entity to send a sensing signal of the sensing service; and sending a second sensing control message to the receiving sensing entity, to indicate the receiving sensing entity to receive a sensing signal of the sensing service. The method may further include: sending a third sensing control message to a sensing processing entity, to indicate the sensing processing entity to process sensing data that is of the sensing service and that is from the receiving sensing entity.

## Description

### TECHNICAL FIELD

Embodiments of this application relate to the field of communication technologies, and in particular, to a sensing service processing method and a communication apparatus.

### BACKGROUND

Both wireless communication and wireless sensing are based on electromagnetic wave theories. An electromagnetic wave signal is modulated at a transmitter, so that an electromagnetic wave carries source information. The electromagnetic wave signal is affected by a wireless environment during propagation, that is, the electromagnetic wave signal is modulated by the environment and therefore also carries environment information. By analyzing the electromagnetic wave signal, a receiver can not only obtain the carried source information, but also extract sensing information that reflects characteristics of the propagation environment, which makes integrated sensing and communication possible.

Communication systems are evolving toward higher frequency bands, larger bandwidths, and denser deployments of large-scale antenna arrays, enabling a single system to integrate sensing and communication capabilities, and allowing mutual enhancement of performance among systems. Sensing serves as a basic feature of the communication system, enabling observation and sampling of both physical and biological worlds. This creates a "new conduit" for integrating the physical and biological worlds with the digital world.

There may be a large amount of sensing service data in the communication system. Therefore, how to process the vast sensing service data is a technical problem urgently to be resolved.

### SUMMARY

Embodiments of this application provide a sensing service processing method and a communication apparatus, to process a large amount of sensing service data, thereby helping improve sensing service processing efficiency.

According to a first aspect, an embodiment of this application provides a sensing service control method. The method may include: obtaining a first sensing service identifier; determining a first sensing entity and a second sensing entity that are associated with a first sensing service, where the first sensing service is determined based on the first sensing service identifier; sending a first sensing control message to the first sensing entity, where the first sensing control message includes first indication information, and the first indication information indicates that the first sensing entity is configured to send a first sensing signal of the first sensing service; and sending a second sensing control message to the second sensing entity, where the second sensing control message includes second indication information, and the second indication information indicates that the second sensing entity is configured to receive a second sensing signal of the first sensing service.

The foregoing method provides a sensing service control method. In a scenario in which there are a large quantity of sensing services in a communication system, sensing entities associated with the first sensing service can be determined, and the sensing control messages can be sent to the sensing entities, so that the sensing entities process sensing services corresponding to the sensing entities. This helps improve sensing service processing efficiency.

The sensing entity associated with the first sensing service may be understood as a sensing entity that provides the first sensing service, a sensing entity that provides a sensing signal of the first sensing service, a sensing entity that provides sensing data of the first sensing service, or the like.

In a possible implementation, the method provided in the first aspect may be performed by a sensing control entity, or may be performed by an apparatus that matches the sensing control entity, for example, a processor, a chip, or a chip system, or may be implemented by a logical node, a logical module, or software that can implement all or some functions of the sensing control entity. A dedicated sensing control entity implements a control-related operation of the sensing service, so that the control-related operation is independent of data processing of the sensing service. This improves flexibility, reliability, and security.

In another possible implementation, the method provided in the first aspect may be performed by an access management entity, or may be performed by an apparatus that matches the access management entity, for example, a processor, a chip, or a chip system, or may be implemented by a logical node, a logical module, or software that can implement all or some of the functions of the access management entity.

In a possible implementation, when the method provided in the first aspect is performed by the sensing control entity, the sensing control entity may further send a third sensing control message to a sensing processing entity, where the third sensing control message indicates the sensing processing entity to process the sensing data that is of the first sensing service and that is from the second sensing entity. The dedicated sensing processing entity processes the sensing data of the sensing service, so that the sensing processing entity can be separated from a module that processes other data. This helps improve sensing service processing efficiency.

In a possible implementation, before the first sensing entity and the second sensing entity that are associated with the first sensing service are determined, sensing capability information of the first sensing entity is received, so that it can be determined, based on the sensing capability information of the first sensing entity, that the first sensing entity is a sending sensing entity and/or a receiving sensing entity.

When the method provided in the first aspect is performed by the sensing control entity, the sensing control entity may directly receive the sensing capability information from the first sensing entity, or may receive the sensing capability information from the first sensing entity through the access management entity. In other words, the first sensing entity sends the sensing capability information to the access management entity, and the access management entity sends the sensing capability information of the first sensing entity to the sensing control entity.

When the method provided in the first aspect is performed by the access management entity, the access management entity receives the sensing capability information from the first sensing entity. Optionally, the access management entity sends the sensing capability information of the first sensing entity to the sensing control entity, so that the sensing control entity determines, based on the sensing capability information, that the first sensing entity is a sending sensing entity and/or a receiving sensing entity.

In a possible implementation, before the first sensing entity and the second sensing entity that are associated with the first sensing service are determined, sensing capability information of the second sensing entity is received, so that it can be determined, based on the sensing capability information of the second sensing entity, that the second sensing entity is a sending sensing entity and/or a receiving sensing entity.

When the method provided in the first aspect is performed by the sensing control entity, the sensing control entity may directly receive the sensing capability information from the second sensing entity, or may receive the sensing capability information from the second sensing entity through the access management entity. In other words, the second sensing entity sends the sensing capability information to the access management entity, and the access management entity sends the sensing capability information of the second sensing entity to the sensing control entity.

When the method provided in the first aspect is performed by the access management entity, the access management entity receives the sensing capability information from the second sensing entity. Optionally, the access management entity sends the sensing capability information of the second sensing entity to the sensing control entity, so that the sensing control entity determines, based on the sensing capability information, that the second sensing entity is a sending sensing entity and/or a receiving sensing entity.

In a possible implementation, the sensing capability information includes one or more of the following information: a device identifier, a role identifier, a device type, geographical location information, a sensing processing capability, and a supported sensing service type. The device identifier is used to uniquely identify a sensing entity. The role identifier indicates that the sensing entity is a sending sensing entity and/or a receiving sensing entity. The device type indicates that the sensing entity is one or more of the following: a network device, user equipment, a vehicle-mounted device, an Internet of Things device, and the like. The geographical location information indicates a geographical location in which the sensing entity is currently located. The sensing processing capability indicates sensing data that can be processed by the sensing entity. The supported sensing service type indicates a sensing service type that can be provided by the sensing entity.

The sensing processing capability includes one or more of the following capabilities: a layer 1 sensing capability, a layer 2 sensing capability, and a layer 3 sensing capability. The layer 1 sensing capability is used to sense raw data, the layer 2 sensing capability is used to sense measurement data, and the layer 3 sensing capability is used to process sensing data to obtain a sensing result. The sensing data includes raw data and/or measurement data.

In a possible implementation, the first sensing entity is the same as the second sensing entity. In other words, the first sensing entity may be used as both a sending sensing entity and a receiving sensing entity. The first sensing entity and the second sensing entity may be a same network device or a same terminal device.

In a possible implementation, the first sensing entity is different from the second sensing entity. The first sensing entity and the second sensing entity may be different network devices or different terminal devices; or the first sensing entity may be a network device, and the second sensing entity may be a terminal device; or the first sensing entity may be a terminal device, and the second sensing entity may be a network device.

In a possible implementation, when the method provided in the first aspect is performed by the sensing control entity, before receiving the sensing service request message, the sensing control entity receives a subscription request message from a sensing subscriber, generates the first sensing service identifier based on the subscription request message, and sends a subscription response message to the sensing subscriber. The subscription response message includes the first sensing service identifier. The sensing control entity feeds back the generated sensing service identifier to the sensing subscriber, so that the sensing subscriber requests a corresponding sensing service from the sensing control entity.

In a possible implementation, the subscription request message includes one or more of the following information: an identifier of the sensing subscriber, subscribed area information, a subscribed sensing service type, and subscribed sensing requirement information. Therefore, the sensing control entity may generate the first sensing service identifier based on content carried in the subscription request message. The first sensing service identifier is used to identify the first sensing service, that is, used to identify a sensing service that the sensing subscriber requests to subscribe to.

In a possible implementation, the first sensing control message further includes one or more of the following information: the first sensing service identifier, a sensing service type of the first sensing service, and sensing requirement information of the first sensing service. The second sensing control message further includes one or more of the following information: the first sensing service identifier, the sensing service type of the first sensing service, and the sensing requirement information of the first sensing service.

The first sensing service identifier is used by the sensing entity to learn of a sensing signal of which sensing service is sent and/or received.

The sensing requirement information may include but is not limited to one or more of distance precision, resolution, recognition accuracy, a false alarm rate, positioning precision, a delay, and the like, so that the sensing entity sends and/or receives a sensing signal that meets the sensing requirement information.

In a possible implementation, the first sensing entity and the second sensing entity are associated with a first subtask for processing the first sensing service, where the first subtask is any subtask in at least one subtask for processing the first sensing service. In other words, the first sensing service may be processed by processing the at least one subtask. Each subtask may be processed by a pair of sensing entities (for example, the first sensing entity and the second sensing entity), and the pair of sensing entities may process one or more subtasks. At least one pair of sensing entities are used to process the first sensing service, so that processing efficiency of the sensing service can be improved.

In a possible implementation, the first sensing control message further includes a first subtask identifier, so that the first sensing entity learns of which subtask in the first sensing service is processed, and then the first sensing entity may send a sensing signal of the subtask. The second sensing control message further includes a first subtask identifier, so that the second sensing entity learns of which subtask in the first sensing service is processed, and the first sensing entity may receive a sensing signal of the subtask. The third sensing control message is further used to indicate an identifier of the at least one subtask, so that the sensing processing entity processes sensing data of the at least one subtask, to obtain a sensing result of the first sensing service.

According to a second aspect, an embodiment of this application provides a sensing service processing method. The method may include: receiving a third sensing control message from a sensing control entity, where the third sensing control message indicates to process sensing data of a first sensing service; receiving the sensing data of the first sensing service, and obtaining a sensing result of the first sensing service based on the sensing data of the first sensing service; and sending the sensing result of the first sensing service.

The method provided in the second aspect may be performed by a sensing processing entity, or may be performed by an apparatus that matches the sensing processing entity, for example, a processor, a chip, or a chip system, or may be implemented by a logical node, a logical module, or software that can implement all or some functions of the sensing processing entity.

It can be learned that, when receiving the third sensing control message, the sensing processing entity may process the received sensing data of the first sensing service, to obtain the sensing result of the first sensing service. The dedicated sensing processing entity processes the sensing data of the sensing service, so that the sensing processing entity can be separated from a module that processes other data. This helps improve sensing service processing efficiency and flexibility, and separate the sensing processing entity from a control entity of the sensing service, thereby improving reliability and security.

In a possible implementation, when the sensing result of the first sensing service is sent, a network exposure module may send the sensing result of the first sensing service to a sensing subscriber of the first sensing service, so that the sensing result of the first sensing service can be transmitted to the sensing subscriber.

In a possible implementation, when the sensing data of the first sensing service is received, the sensing data of the first sensing service may be received through a sensing data bearer. The sensing data bearer is a channel that is established by a sensing entity and that is used to transmit sensing data. The sensing data bearer may support a data transmission logical channel for data in-path processing and forwarding.

According to a third aspect, an embodiment of this application provides a sensing service processing method. The method may include: receiving a first sensing control message and/or a second sensing control message, where the first sensing control message indicates to send a first sensing signal of a first sensing service, and the second sensing control message indicates to receive a second sensing signal of the first sensing service; and sending the first sensing signal based on the first sensing control message; and/or receiving the second sensing signal based on the second sensing control message.

The method provided in the third aspect may be performed by a sensing entity, or may be performed by an apparatus that matches the sensing entity, for example, a processor, a chip, or a chip system, or may be implemented by a logical node, a logical module, or software that can implement all or some functions of the sensing entity. A first sensing entity may be understood as a sending sensing entity, and a second sensing entity may be understood as a receiving sensing entity.

It can be learned that the sensing entity may send the first sensing signal of the first sensing service based on the first sensing control message, and may receive the second sensing signal of the first sensing service based on the second sensing control message. Therefore, in a scenario in which there are a large quantity of sensing services in a communication system, each sensing entity may process sensing service data corresponding to the sensing entity. This helps improve sensing service processing efficiency.

In a possible implementation, before receiving the first sensing control message and/or the second sensing control message, the sensing entity may further send sensing capability information. Optionally, the sensing entity sends the sensing capability information to an access management entity and/or a sensing control entity, so that the access management entity and/or the sensing control entity determine/determines, based on the sensing capability information, that the sensing entity is a sending sensing entity and/or a receiving sensing entity of a sensing service.

In a possible implementation, the sensing capability information includes one or more of the following information: a device identifier, a role identifier, a device type, geographical location information, a sensing processing capability, and a supported sensing service type. The device identifier is used to uniquely identify a sensing entity. The role identifier indicates that the sensing entity is a sending sensing entity and/or a receiving sensing entity. The device type indicates that the sensing entity is one or more of the following: a network device, user equipment, a vehicle-mounted device, an Internet of Things device, and the like. The geographical location information indicates a geographical location in which the sensing entity is currently located. The sensing processing capability indicates sensing data that can be processed by the sensing entity. The supported sensing service type indicates a sensing service type that can be provided by the sensing entity.

The sensing processing capability includes one or more of the following capabilities: a layer 1 sensing capability, a layer 2 sensing capability, and a layer 3 sensing capability. The layer 1 sensing capability is used to sense raw data, the layer 2 sensing capability is used to sense measurement data, and the layer 3 sensing capability is used to process sensing data to obtain a sensing result. The sensing data includes raw data and/or measurement data.

In a possible implementation, the first sensing control message is further used to indicate one or more of the following information: a first sensing service identifier and a sensing service type of the first sensing service; and/or the second sensing control message is further used to indicate one or more of the following information: the first sensing service identifier and the sensing service type of the first sensing service.

In a possible implementation, the first sensing control message further indicates a first subtask identifier; and/or the second sensing control message further indicates the first subtask identifier. The first subtask identifier is used to identify a first subtask, and the first subtask is any subtask in at least one subtask for processing the first sensing service. In other words, the first sensing entity and/or the second sensing entity are/is configured to process the first subtask of the first sensing service.

According to a fourth aspect, an embodiment of this application provides a communication apparatus. The communication apparatus may be a sensing control entity, an apparatus in the sensing control entity, or an apparatus that can be used together with the sensing control entity. Alternatively, the communication apparatus may be an access management entity, an apparatus in the access management entity, or an apparatus that can be used together with the access management entity. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the first aspect.

According to a fifth aspect, this application provides a communication apparatus. The communication apparatus may be a sensing processing entity, an apparatus in the sensing processing entity, or an apparatus that can be used together with the sensing processing entity. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the second aspect.

According to a sixth aspect, this application provides a communication apparatus. The communication apparatus may be a sensing entity, an apparatus in the sensing entity, or an apparatus that can be used together with the sensing entity. The communication apparatus may alternatively be a chip system. The communication apparatus may perform the method in the third aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the third aspect.

According to a seventh aspect, this application provides a communication apparatus. The communication apparatus includes a processor, and the processor is configured to perform the method according to the first aspect, the method according to the second aspect, or the method according to the third aspect.

According to an eighth aspect, this application provides a communication apparatus. The communication apparatus includes a processor. The processor is coupled to a memory. The memory stores instructions. When the instructions are executed by the processor, the communication apparatus is enabled to perform the method according to the first aspect, the method according to the second aspect, or the method according to the third aspect.

In a possible implementation, the communication apparatus further includes the memory. Optionally, the processor is integrated with the memory. Optionally, the memory and the processor are independently disposed.

According to a ninth aspect, this application provides a communication apparatus. The communication apparatus includes a processor and an interface circuit. The interface circuit is configured to: receive a signal from outside the communication apparatus and transmit the signal to the processor, or send a signal from the processor to another communication apparatus other than the communication apparatus. The processor is configured to implement, by using a logic circuit or executing computer instructions, the method according to the first aspect, the method according to the second aspect, or the method according to the third aspect.

According to a tenth aspect, this application provides a computer-readable storage medium. The storage medium stores instructions, and when the computer program or the instructions are executed by a communication apparatus, the method according to the first aspect, the method according to the second aspect, or the method according to the third aspect is implemented.

According to an eleventh aspect, this application provides a computer program product including instructions. When a communication apparatus reads and executes the instructions, the communication apparatus is enabled to perform the method according to the first aspect, the method according to the second aspect, or the method according to the third aspect.

According to a twelfth aspect, this application provides a communication system, including a sensing control entity and a sensing processing entity. The sensing entity is configured to perform the method in the first aspect and the possible implementations of the first aspect, and the sensing processing entity is configured to perform the method in the second aspect and the possible implementations of the second aspect.

In a possible implementation, the communication system further includes the sensing entity, and the sensing entity is configured to perform the method in the third aspect and the possible implementations of the third aspect.

According to a thirteenth aspect, this application provides a communication system, including a sensing control entity and a sensing processing entity. The sensing control entity is configured to: obtain a first sensing service identifier; determine a first sensing entity and a second sensing entity that are associated with a first sensing service, where the first sensing service is determined based on the first sensing service identifier; send a first sensing control message to the first sensing entity, where the first sensing control message includes first indication information, and the first indication information indicates that the first sensing entity is configured to send a first sensing signal of the first sensing service; send a second sensing control message to the second sensing entity, where the second sensing control message includes second indication information, and the second indication information indicates that the second sensing entity is configured to receive a second sensing signal of the first sensing service; and send a third sensing control message to the sensing processing entity, where the third sensing control message indicates the sensing processing entity to process sensing data that is of the first sensing service and that is from the second sensing entity.

The sensing processing entity is configured to: receive the sensing data of the first sensing service, obtain a sensing result of the first sensing service based on the sensing data of the first sensing service, and send the sensing result of the first sensing service.

In a possible implementation, the communication system further includes the first sensing entity and the second sensing entity. The first sensing entity is configured to send the first sensing signal based on the first sensing control message. The second sensing entity is configured to receive the second sensing signal based on the second sensing control message.

In a possible implementation, the first sensing entity is further configured to send sensing capability information of the first sensing entity; and the second sensing entity is further configured to send sensing capability information of the second sensing entity.

According to a fourteenth aspect, this application provides a communication system, including an access management entity, a sensing control entity, and a sensing processing entity.

The sensing control entity is configured to: obtain a first sensing service identifier, and send a sensing service request message to the access management entity; and send a third sensing control message to the sensing processing entity, where the third sensing control message indicates the sensing processing entity to process sensing data that is of a first sensing service and that is from a second sensing entity.

The access management entity is configured to: determine a first sensing entity and the second sensing entity that are associated with the first sensing service, where the first sensing service is determined based on the first sensing service identifier; send a first sensing control message to the first sensing entity, where the first sensing control message includes first indication information, and the first indication information indicates that the first sensing entity is configured to send a first sensing signal of the first sensing service; and send a second sensing control message to the second sensing entity, where the second sensing control message includes second indication information, and the second indication information indicates that the second sensing entity is configured to receive a second sensing signal of the first sensing service.

The sensing processing entity is configured to: receive the sensing data of the first sensing service, obtain a sensing result of the first sensing service based on the sensing data of the first sensing service, and send the sensing result of the first sensing service.

In a possible implementation, the communication system further includes the first sensing entity and the second sensing entity.

The first sensing entity is configured to send the first sensing signal based on the first sensing control message.

The second sensing entity is configured to receive the second sensing signal based on the second sensing control message.

In a possible implementation, the first sensing entity is further configured to send sensing capability information of the first sensing entity; and the second sensing entity is further configured to send sensing capability information of the second sensing entity.

### BRIEF DESCRIPTION OF DRAWINGS

FIG. 1 is an example diagram of six sensing scenarios;
FIG. 2 is an example diagram of several networking architectures according to an embodiment of this application;
FIG. 3 is a schematic flowchart of sensing capability information registration according to an embodiment of this application;
FIG. 4 is another schematic flowchart of sensing capability information registration according to an embodiment of this application;
FIG. 5 is a schematic flowchart of sensing service subscription according to an embodiment of this application;
FIG. 6 is a schematic flowchart of a sensing service processing method according to an embodiment of this application;
FIG. 7 is a schematic flowchart of another sensing service processing method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

In this application, words such as "first" and "second" are used to distinguish between same items or similar items that have basically a same function or purpose. A person skilled in the art may understand that the terms such as "first" and "second" do not limit a quantity or an execution sequence, and the terms such as "first" and "second" do not indicate a definite difference. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of" means two or more. In addition, "equal to" in this application may be used together with "greater than", or may be used together with "less than". In a case in which "equal to" and "greater than" are used together, a technical solution corresponding to "greater than" is used; and in a case in which "equal to" and "less than" are used together, a technical solution corresponding to "less than" is used.

In this application, "sending information to ... (for example, a terminal device)" may be understood as that a destination end of the information is the terminal device, and may include directly or indirectly sending information to the terminal device. "Receiving information from ... (for example, a terminal device)" or "receiving information of ... (for example, a terminal device)" may be understood as that a source end of the information is the terminal device, and may include directly or indirectly receiving information from the terminal device. Information may undergo necessary processing, for example, a format change, between the source end for sending the information and the destination end. However, the destination end may understand valid information from the source end. A similar expression in this application may be understood similarly. Details are not described herein again.

First, related names or terms in this application are described, to facilitate understanding by a person skilled in the art.

### I. Sensing

### 1. Definition of sensing

Wireless sensing means sensing using wireless signals. Sensing is a process of collecting and processing collected data, and generating a sensing result. For example, a distance, a shape, a type, and the like of a surrounding obstacle are determined based on the collected data. For another example, a breathing frequency, heartbeats, and the like of a monitored object are determined based on the collected data. The collected data may be data collected using sensors, or may be data collected using wireless signals.

Both wireless sensing and wireless communication are based on electromagnetic wave theories. An electromagnetic wave signal is modulated at a transmitter, so that the electromagnetic wave signal carries source information. The electromagnetic wave signal is affected by a wireless environment during propagation. In other words, the electromagnetic wave signal is affected by the environment, and therefore can also carry environment information. By analyzing the electromagnetic wave signal, a receiver can not only obtain the carried source information, but also extract sensing information that reflects characteristics of the propagation environment. In other words, the electromagnetic wave signal has inherent communication and sensing capabilities, which makes integrated sensing and communication (integrated sensing and communication, ISAC) possible. Integrated sensing and communication may also be referred to as joint communication and sensing (joint communication and sensing, JCAS), or sensing-communication integration for short. Compared with a system in which sensing and communication are separated, ISAC has various advantages, for example, reducing costs, reducing a device size, reducing power consumption, improving frequency efficiency, and reducing mutual interference between communication and sensing.

### 2. Sensing scenarios

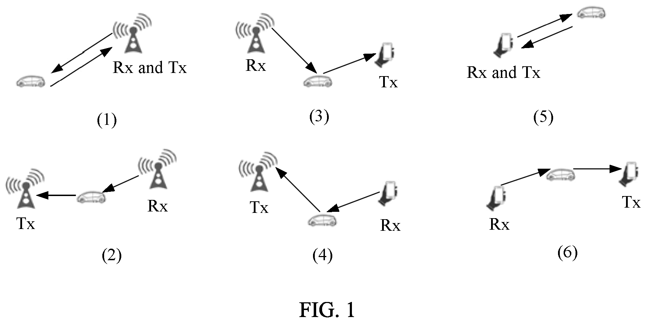

The sensing scenarios may be classified into network device-based scenarios, scenarios involving both a network device and a terminal device, and terminal device-based scenarios. For example, refer to sensing scenarios shown in (1) to (6) in FIG. 1.

The sensing scenario shown in (1) in FIG. 1 is a network device-based scenario. A network device serves as a transmitter and a receiver of a sensing signal. For example, a sensing signal 1 sent by the network device arrives at a target object (for example, a vehicle), and the sensing signal 1 is reflected by the target object. The network device may receive a sensing signal 2, and may further process the sensing signal 2 to obtain a sensing result.

The sensing scenario shown in (2) in FIG. 1 is also a network device-based scenario. One network device serves as a transmitter of a sensing signal, and the other network device serves as a receiver of a sensing signal. For example, a sensing signal 1 sent by a network device A reaches a target object, and the sensing signal 1 is reflected by the target object. A network device B may receive a sensing signal 2, and then the network device B may process the sensing signal 2 to obtain a sensing result.

The sensing scenario shown in (3) in FIG. 1 is a sensing scenario involving both a network device and a terminal device. The network device serves as a transmitter of a sensing signal, and the terminal device serves as a receiver of a sensing signal. For example, a sensing signal 1 sent by the network device arrives at a target object, and the sensing signal 1 is reflected by the target object. The terminal device may receive a sensing signal 2, and then the terminal device may process the sensing signal 2 to obtain a sensing result.

The sensing scenario shown in (4) in FIG. 1 is also a sensing scenario involving both a network device and a terminal device. The terminal device serves as a transmitter of a sensing signal, and the network device serves as a receiver of a sensing signal. For example, a sensing signal 1 sent by the terminal device arrives at a target object, and the sensing signal 1 is reflected by the target object. The network device may receive a sensing signal 2, and then the network device may process the sensing signal 2 to obtain a sensing result.

The sensing scenario shown in (5) in FIG. 1 is a terminal device-based sensing scenario. A serves as a transmitter and a receiver of a sensing signal. For example, a sensing signal 1 sent by the terminal device arrives at a target object, and the sensing signal 1 is reflected by the target object. The terminal device may receive a sensing signal 2, and may further process the sensing signal 2 to obtain a sensing result.

The sensing scenario shown in (6) in FIG. 1 is also a terminal device-based sensing scenario. One terminal device serves as a transmitter of a sensing signal, and the other terminal device serves as a receiver of a sensing signal. For example, a sensing signal 1 sent by a terminal device a reaches a target object, and the sensing signal 1 is reflected by the target object. A terminal device b may receive a sensing signal 2, and then the terminal device b may process the sensing signal 2 to obtain a sensing result.

The sensing signal 2 may be understood as a reflected signal of the sensing signal 1, and the sensing signal 2 carries more information than the sensing signal 1. For example, the sensing signal 2 may carry source information and environment information.

### 3. Sensing entity (sensing entity, SE)

The sensing entity may send and/or receive a sensing signal, and may further send a sensing capability to a sensing control entity or an access management entity. In embodiments of this application, the sensing capability may include one or more of the following capabilities.
(1) Layer 1 (layer 1, L1) sensing capability: It is used to sense raw data. The raw data is basic information of a sensing signal, for example, one or more of an amplitude, a phase, and whether the sensing signal is an I signal or a Q signal.
(2) Layer 2 (layer 2, L2) sensing capability: It is used to sense measurement data. The measurement data is data that is obtained by processing raw data and that indicates a measurement dimension. The measurement data may include but is not limited to one or more of: a delay of a sampling point, a receiving angle of a sensing signal, signal strength of a sensing signal, Doppler (to be specific, an offset of a frequency of a sensing signal), a location of a target object, and a speed of the target object. Sampling points are signal values that are at some specific moments or locations and that are selected when discretization processing is performed on continuous signals in a signal processing process.
(3) Layer 3 (layer 3, L3) sensing capability: It is used to process sensing data to obtain a sensing result. The sensing data may be raw data and/or measurement data. The sensing result may include but is not limited to one or more of: a distance between a sensing entity and a target object, a speed of the target object, a location of the target object, an angle between the sensing entity and the target object, a movement path of the target object, a breathing frequency of the target object, and heartbeats of the target object.

The sensing entity is a logical entity, also referred to as a logical sensing entity. The sensing entity may be deployed on a network device or a terminal device. In other words, a network device or a terminal device having a sensing capability may serve as a sensing entity, and the sensing entity may be a network device or a terminal device having a sensing capability. The network device or the terminal device may have the foregoing three capabilities, or may have one capability or several capabilities thereof. For example, some terminal devices with weak computational power have the L1 sensing capability, but do not have the L2 sensing capability or the L3 sensing capability. For another example, some network devices have the foregoing three capabilities. The sensing entity may alternatively be deployed independently.

### II. Terminal device

The terminal device, also referred to as user equipment (user equipment, UE), a mobile station (mobile station, MS), a mobile terminal (mobile terminal, MT), or the like, may be a device providing voice or data connectivity for users, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or the like), a vehicle-mounted device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device with a terminal function. For example, the terminal device may alternatively be a device that has a terminal function in D2D communication.

### III. Network device

The network device is a node in a radio access network (radio access network, RAN), and may also be referred to as an access network device, or may also be referred to as a RAN node (or device). The network device enables wireless access for terminal devices. In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G system, a base station in a future mobile communication system, a satellite, an integrated access and backhaul (integrated access and backhaul, IAB) node, or an access network device in a mobile switching center-based non-terrestrial communication network (non-terrestrial network, NTN) communication system, that is, the network device may be deployed on a high-altitude platform, a satellite, or the like. The network device may be a macro base station, a micro base station, an indoor base station, a relay node, a donor node, or a radio controller in a cloud radio access network (cloud radio access network, CRAN) scenario. The network device may alternatively be a device with a base station function in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, a network device in a vehicle to everything (vehicle to everything, V2X) technology may be a road side unit (road side unit, RSU).

All or some functions of the network device in this application may alternatively be implemented using a software function running on hardware, or implemented using a virtualized function instantiated on a platform (for example, a cloud platform). The network device in this application may alternatively be a logical node, a logical module, or software that can implement all or some functions of the network device.

In another possible scenario, a plurality of network devices collaborate to enable radio access for terminals, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

With rapid development of communication technologies and sensing technologies, there is an increasing amount of sensing service data. How to process a large amount of sensing service data is an urgent technical problem to be resolved. In an implementation, to enable the 5G system to support ISAC, a sensing function (sensing function, SF) entity is considered to be introduced into a 5G core network architecture. However, a location of the SF entity in the 5G core network architecture and a connection relationship between the SF entity and another core network entity are not specified, and no end-to-end signaling process is defined. In this implementation, both sensing-related control signaling and service data are processed by one entity, and transmission bandwidth is shared, resulting in problems such as poor security and inconvenient upgrade and capacity expansion.

In view of this, embodiments of this application provide a sensing service processing method and a communication apparatus, to introduce two core network functional modules to process a large amount of sensing service data, thereby helping improve sensing service processing efficiency. One of the two core network functional modules is configured to implement a control plane function of the sensing service, for example, configured to receive sensing capability information of a sensing entity, and orchestrate the sensing service based on the sensing capability information of the sensing entity. The other core network functional module is configured to implement a data plane function of the sensing service, for example, configured to process sensing data of the sensing service, to obtain a sensing result of the sensing service. After the control plane function of the sensing service and the data plane function of the sensing service are deployed independently, a quantity of control plane functional entities and a quantity of data plane functional entities may be flexibly configured and adjusted based on a resource and a service status. Then, attacks on the data plane do not affect the control plane, and vice versa. This improves reliability and security of the sensing service.

Orchestrating the sensing service may include selecting a sending sensing entity and a receiving sensing entity, and the sending sensing entity and the receiving sensing entity may be a same sensing entity. The sending sensing entity is a transmitter of a sensing signal, and is configured to send a sensing signal. The receiving sensing entity is a receiver of a sensing signal, and is configured to receive a sensing signal.

Processing the sensing data may include processing raw data to obtain measurement data, and/or processing measurement data to obtain a sensing result. The measurement data may be obtained by processing the raw data, or may be obtained through sensing by the sensing entity.

In embodiments of this application, the core network functional module configured to receive the sensing capability information and orchestrating the sensing service may be referred to as a sensing control entity, and the core network functional module configured to process the sensing data to obtain the sensing result may be referred to as a sensing processing entity. The two names of the sensing control entity and the sensing processing entity are used as examples, and do not constitute a limitation on embodiments of this application. With development of communication technologies and sensing technologies, the two modules may use other names. For example, the sensing control entity may also be described as a sensing service control function (sensing service control function, SSCF), a sensing service control network element, a sensing control network element, or the like; and the sensing processing entity may also be described as a sensing data process function (sensing data process function, SDPF), a sensing data process network element, a sensing process network element, or the like. For ease of description, in the following embodiments, the sensing control entity is described as the SSCF, and the sensing processing entity is described as the SDPF.

In embodiments of this application, an example in which the SSCF and the SDPF are introduced into a core network architecture of a 5G system is used, to better be compatible with the 5G system, so that the 5G system can be smoothly evolved to a 6G system. The SSCF may be mounted to an SBI bus through a service-based interface (service-based interface, SBI) to communicate with another core network functional module. The SDPF may be mounted to the SBI bus through the SBI to communicate with another core network functional module, or may communicate with another core network functional module through a separate interface, for example, communicate with another SDPF through a separate interface, or communicate with the SSCF through a separate interface.

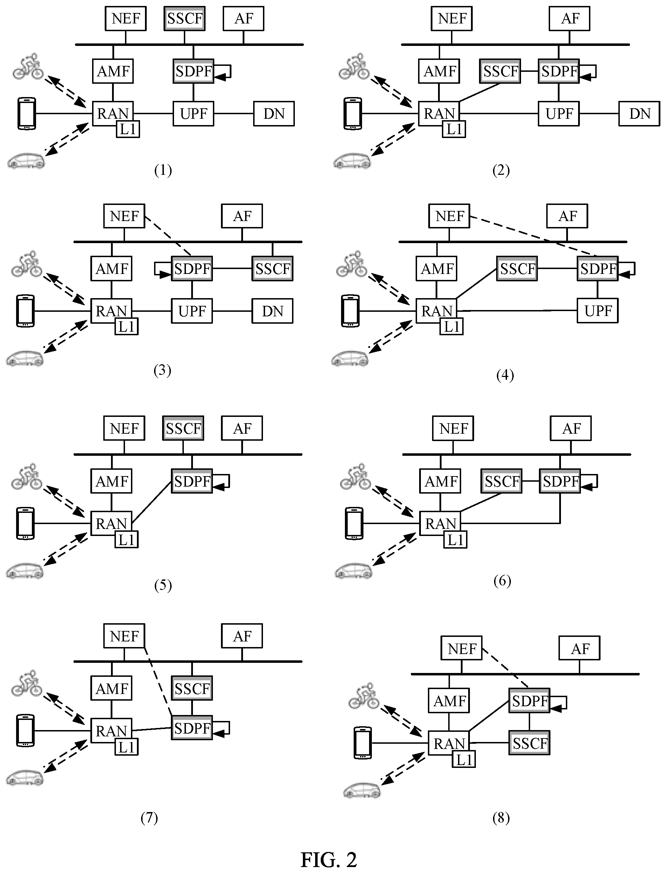

For example, for networking architectures after the SSCF and the SDPF are introduced, refer to (1) to (8) in FIG. 2.

In a networking architecture shown in (1) in FIG. 2, a RAN is connected to the SSCF through an access and mobility management function (access and mobility management function, AMF), the RAN is connected to the SDPF through a user plane function (user plane function, UPF), the SDPF is mounted to an SBI bus through an SBI, and the SSCF is mounted to the SBI bus through an SBI. In this case, the RAN may perform control plane communication with the SSCF through the AMF, and the RAN may perform data plane communication with the SDPF through the UPF.

In a networking architecture shown in (2) in FIG. 2, a RAN is directly connected to the SSCF, the RAN is connected to the SDPF through a UPF, the SDPF is mounted to an SBI bus through an SBI interface, and the SSCF is not mounted to the SBI bus. In this case, the RAN may directly perform control plane communication with the SSCF, and the RAN may perform data plane communication with the SDPF through the UPF.

In a networking architecture shown in (3) in FIG. 2, a RAN is connected to the SSCF through an AMF, the RAN is connected to the SDPF through a UPF, the SDPF is not mounted to an SBI bus, and the SSCF is mounted to the SBI bus through an SBI. In this case, the RAN may perform control plane communication with the SSCF through the AMF, and the RAN may perform data plane communication with the SDPF through the UPF.

In a networking architecture shown in (4) in FIG. 2, a RAN is directly connected to the SSCF, the RAN is connected to the SDPF through a UPF, the SDPF is not mounted to an SBI bus, and the SSCF is not mounted to the SBI bus. In this case, the RAN may directly perform control plane communication with the SSCF, and the RAN may perform data plane communication with the SDPF through the UPF.

In a networking architecture shown in (5) in FIG. 2, a RAN is connected to the SSCF through an AMF, the RAN is directly connected to the SDPF, the SDPF is mounted to an SBI bus through an SBI, and the SSCF is mounted to the SBI bus through an SBI. In this case, the RAN may perform control plane communication with the SSCF through the AMF, and the RAN may directly perform data plane communication with the SDPF.

In a networking architecture shown in (6) in FIG. 2, a RAN is directly connected to the SSCF, the RAN is directly connected to the SDPF, the SDPF is mounted to an SBI bus through an SBI, and the SSCF is not mounted to the SBI bus. In this case, the RAN may directly perform control plane communication with the SSCF, and the RAN may directly perform data plane communication with the SDPF.

In a networking architecture shown in (7) in FIG. 2, a RAN is connected to the SSCF through an AMF, the RAN is directly connected to the SDPF, the SDPF is not mounted to an SBI bus, and the SSCF is mounted to the SBI bus through an SBI. In this case, the RAN may perform control plane communication with the SSCF through the AMF, and the RAN may directly perform data plane communication with the SDPF.

In a networking architecture shown in (8) in FIG. 2, a RAN is directly connected to the SSCF, the RAN is directly connected to the SDPF, the SDPF is not mounted to an SBI bus, and the SSCF is not mounted to the SBI bus. In this case, the RAN may directly perform control plane communication with the SSCF, and the RAN may directly perform data plane communication with the SDPF.

It can be learned from FIG. 2 that: (1) The RAN may directly perform control plane communication with the SSCF, or perform control plane communication with the SSCF through the AMF. (2) The SDPF may be mounted to the SBI bus, or may not be mounted to the SBI bus. (3) The RAN may directly perform data plane communication with the SDPF, or perform data plane communication with the SDPF through the UPF. The control plane communication refers to transmission of a control plane message, for example, a control message in embodiments of this application. The data plane communication refers to transmission of sensing data and/or a sensing result.

A subscript L1 of the RAN in FIG. 2 indicates that the RAN has an L1 sensing capability. Therefore, the RAN may send a sensing signal to a target object (for example, a bicycle and a car in the figure), and sense raw data based on a sensing signal reflected by the target object. In FIG. 2, an example in which the RAN has the L1 sensing capability is used. In actual application, the RAN may further have an L2 sensing capability, or may further have an L2 sensing capability and an L3 sensing capability. In actual application, UE may also have a sensing capability. For example, the UE has at least one of the L1 sensing capability, the L2 sensing capability, and the L3 sensing capability.

A dashed line between the SDPF and a network exposure function (network exposure function, NEF) in FIG. 2 indicates that the SDPF may or may not communicate with the NEF. If the SDPF is not mounted to the SBI bus, the SDPF may communicate with the NEF through the dashed line. In FIG. 2, an arrow pointing from the SDPF to the SDPF indicates that SDPFs may communicate with each other, for example, transmit sensing data and/or a sensing result.

In embodiments of this application, the AMF is referred to as an access management entity, and the NEF is referred to as a network exposure entity. For ease of description, the AMF and the NEF are used as an example for description in the following embodiments.

Based on the networking architectures shown in FIG. 2, the SSCF and the SDPF may be independently upgraded and maintained without affecting each other, so that a core network functional entity can be flexibly deployed and managed in a network. In FIG. 2, one SSCF and one SDPF are used as an example, and do not constitute a limitation on embodiments of this application. For example, a quantity of SDPFs may be increased or decreased based on an actual requirement. Even if the quantity of SDPFs is decreased, the SSCF is not affected. In this way, the network can be easily expanded or simplified. By introducing the SSCF and the SDPF, a control plane and a data plane of a sensing service can be separated, so that an attacker cannot attack a control plane entity (namely, the SSCF) via a data plane entity (namely, the SDPF). This helps improve network security. In addition, the control plane and the data plane of the sensing service are separated, so that the control plane entity can respond to a request of the data plane entity more quickly. This reduces a network delay and helps improve a network response speed.

Embodiments of this application may be applied to a communication system evolved after 5G, for example, a 5G system or a 6G system, and a wireless communication system like a satellite communication system or a short-range communication system. The wireless communication system mentioned in embodiments of this application includes but is not limited to three application scenarios of the 5G/6G system: enhanced mobile broadband (enhanced Mobile Broadband, eMBB), ultra-reliable low-latency communication (ultra-reliable low-latency communication, URLLC) and massive machine-type communication (Massive Machine-Type communication, mMTC), and a long range (long range, LoRa) internet of things system or an internet of vehicles system. Embodiments of this application may be further applied to an ORAN system, a CRAN system, and the like.

The following describes in detail the sensing service processing method provided in embodiments of this application based on the networking architecture shown in FIG. 2.

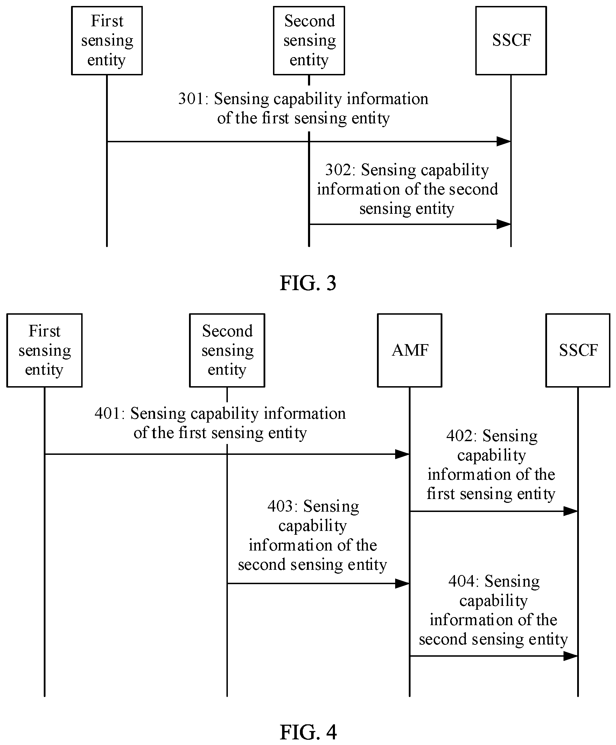

FIG. 3 is a schematic flowchart of sensing capability information registration according to an embodiment of this application. The registration procedure may include but is not limited to the following steps.

301: A first sensing entity sends sensing capability information of the first sensing entity to an SSCF. Correspondingly, the SSCF receives the sensing capability information of the first sensing entity from the first sensing entity.

302: A second sensing entity sends sensing capability information of the second sensing entity to the SSCF. Correspondingly, the SSCF receives the sensing capability information of the second sensing entity from the second sensing entity.

The first sensing entity is the same as or different from the second sensing entity. When the first sensing entity is the same as the second sensing entity, it indicates that the first sensing entity may be used as both a sending sensing entity and a receiving sensing entity. When the first sensing entity is the same as the second sensing entity, the first sensing entity and the second sensing entity may be a same network device or a same terminal device. Optionally, the network device or the terminal device may send one piece of sensing capability information to the SSCF. This helps reduce air interface resources and signaling overheads. When the first sensing entity is different from the second sensing entity, the first sensing entity and the second sensing entity may be different network devices or different terminal devices; or the first sensing entity may be a network device, and the second sensing entity may be a terminal device; or the first sensing entity may be a terminal device, and the second sensing entity may be a network device; or the first sensing entity and the second sensing entity may be different network devices; or the first sensing entity and the second sensing entity may be different terminal devices. Further, the first sensing entity and the second sensing entity separately send sensing capability information to the SSCF.

The sensing capability information includes one or more of the following information: a device identifier, a role identifier, a device type, geographical location information, a sensing processing capability, and a supported sensing service type.

The device identifier is used to uniquely identify a sensing entity. For example, the first sensing entity is a terminal device, and the device identifier may be an international mobile equipment identity (International mobile equipment identity, IMEI), a subscription permanent identifier (subscription permanent identifier, SUPI), a subscription concealed identifier (subscription concealed identifier, SUCI), a media access control (media access control, MAC) address, or the like. For another example, the first sensing entity is a network device, the device identifier may be a cell identifier and/or a tracking area identity (tracking area identity, TAI), and the like, and the cell identifier may be, for example, a physical cell identifier (physical cell identifier, PCI).

The role identifier indicates that a sensing entity is a sending sensing entity and/or a receiving sensing entity.

The device type indicates that a sensing entity is a network device or a terminal device. Optionally, if the sensing entity is a network device, the device type may further indicate that the network device is a base station, a CU, a DU, or the like. If the sensing entity is a terminal device, the device type may further indicate that the terminal device is UE, an internet of things device, a flight device, a VR device, or the like.

The geographical location information may indicate one or more of the following: a geographical location in which a sensing entity is currently located, and a geographical location range that can be sensed by the sensing entity. The geographical location is, for example, longitude and latitude information and global positioning system (global positioning system, GPS) location information.

The sensing processing capability indicates that a sensing entity has one or more of an L1 sensing processing capability, an L2 sensing processing capability, and an L3 sensing processing capability. For the three sensing capabilities, refer to specific descriptions of the sensing processing capabilities in "3. Sensing entity". Details are not described herein again.

The supported sensing service type indicates a sensing service type that can be provided by a sensing entity, and may include but is not limited to one or more of the following types: an environment category, a monitoring category, an imaging category, a positioning category, and the like. The environment category may include but is not limited to one or more of an ambient temperature, ambient humidity, air quality, a weather condition, crowd density, vehicle flow density, atmospheric pressure, and the like. The monitoring category may include but is not limited to one or more of monitoring such as movement monitoring, intrusion monitoring, fall monitoring, and health monitoring. The movement monitoring may include but is not limited to one or more of distance monitoring, location monitoring, movement speed monitoring, movement path monitoring, and the like. The health monitoring may include but is not limited to one or more of information such as a breathing frequency and heartbeats. The imaging category may include but is not limited to one or more of medical imaging, 3D map imaging, 3D map construction, building imaging, body temperature imaging, and the like.

In an implementation, the sensing capability information includes one or more of the following information elements:
(1) Node ID: This information element indicates a device identifier.
(2) role_list: The information element indicates that the sensing entity is a sending sensing entity and/or a receiving sensing entity.
(3) Node_type: The information element indicates that the sensing entity is a base station, a CU, a DU, UE, an internet of things device, a flight device, a VR device, or the like.
(4) Location: The information element indicates a current geographical location of the sensing entity.
(5) Capability_indicator: The information element indicates that the sensing entity has one or more of an L1 sensing processing capability, an L2 sensing processing capability, and an L3 sensing processing capability.
(6) service_type: The information element indicates sensing information of a sensing service that can be provided by the sensing entity.

In FIG. 3, an example in which two sensing entities send sensing capability information to the SSCF is used. In actual application, there may be a case in which a plurality of sensing entities send sensing capability information to the SSCF. The plurality of sensing entities may simultaneously send the sensing capability information, or may not simultaneously send the sensing capability information. Optionally, the sensing entity may send the sensing capability information to the SSCF when being powered on or restarted.

Optionally, when receiving the sensing capability information, the SSCF may store the sensing capability information of the sensing entity, and store a correspondence between each sensing entity and the sensing capability information.

The sensing capability information sent by the sensing entity to the SSCF for the first time may be carried in a registration message. In other words, the sensing entity registers the sensing capability information with the SSCF. If one or more pieces of information in the sensing capability information change, the sensing entity sends updated sensing capability information to the SSCF. The updated sensing capability information may be carried in an updated message. The updated sensing capability information may include one or more pieces of changed information, or may include information about all items. For example, after a geographical location of the sensing entity moves from a location A to a location B, the updated sensing capability information includes geographical location information of the location B. When receiving the updated sensing capability information, the SSCF updates the previously stored sensing capability information, so that the sensing capability information is updated in real time.

In the embodiment shown in FIG. 3, the sensing entity sends the sensing capability information to the SSCF, so that the SSCF can determine, based on the sensing capability information, that the sensing entity is the sending sensing entity and/or the receiving sensing entity.

FIG. 4 is another schematic flowchart of sensing capability information registration according to an embodiment of this application. The registration procedure may include but is not limited to the following steps.

401: A first sensing entity sends sensing capability information of the first sensing entity to an AMF. Correspondingly, the AMF receives the sensing capability information of the first sensing entity from the first sensing entity.

402: The AMF sends the sensing capability information of the first sensing entity to an SSCF. Correspondingly, the SSCF receives the sensing capability information of the first sensing entity from the AMF.

403: A second sensing entity sends sensing capability information of the second sensing entity to the AMF. Correspondingly, the AMF receives the sensing capability information of the second sensing entity from the second sensing entity.

404: The AMF sends the sensing capability information of the second sensing entity to the SSCF. Correspondingly, the SSCF receives the sensing capability information of the second sensing entity from the AMF.

A difference between the embodiment shown in FIG. 4 and the embodiment shown in FIG. 3 lies in that, the sensing entity directly sends the sensing capability information to the SSCF in the embodiment shown in FIG. 3, while the sensing entity sends the sensing capability information to the SSCF through the AMF in the embodiment shown in FIG. 4.

The sensing capability information sent by the sensing entity to the AMF may be carried in a non-access stratum (non-access stratum, NAS) message, and the sensing capability information sent by the AMF to the SSCF may be carried in a registration message.

Optionally, when receiving the sensing capability information, the AMF may store the sensing capability information, and establish a correspondence between each sensing entity and the sensing capability information. The AMF stores the sensing capability information, so that the AMF can determine, based on the sensing capability information, that the sensing entity is a sending sensing entity and/or a receiving sensing entity.

In the embodiment shown in FIG. 4, the sensing entity sends the sensing capability information to the SSCF via the AMF, so that both the AMF and the SSCF can determine, based on the sensing capability information, that the sensing entity is the sending sensing entity and/or the receiving sensing entity.

In the embodiments shown in FIG. 3 and FIG. 4, if the first sensing entity and/or the second sensing entity are/is terminal devices/a terminal device, the sensing capability information of the first sensing entity and/or the second sensing entity is sent to the SSCF through a RAN, or is sent to the AMF through the RAN, and then is sent by the AMF to the SSCF. If the first sensing entity is a terminal device and the second sensing entity is a network device, the second sensing entity may first send the sensing capability information of the second sensing entity to the SSCF, and then send the sensing capability information of the first sensing entity to the SSCF; or simultaneously send the sensing capability information of the first sensing entity and the sensing capability information of the second sensing entity to the SSCF; or first send the sensing capability information of the first sensing entity to the SSCF, and then send the sensing capability information of the second sensing entity to the SSCF.

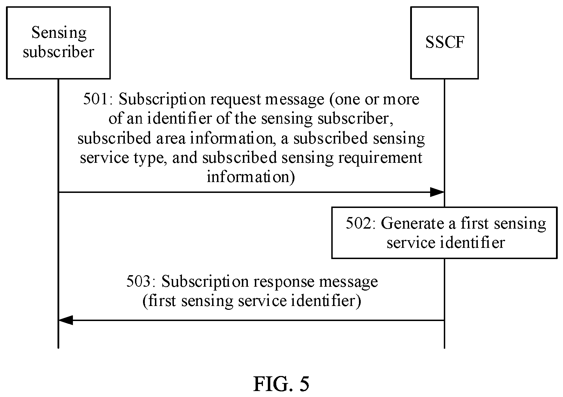

FIG. 5 is a schematic flowchart of sensing service subscription according to an embodiment of this application. The subscription procedure may include but is not limited to the following steps.

501: A sensing subscriber sends a subscription request message to an SSCF. Correspondingly, the SSCF receives the subscription request message from the sensing subscriber.

The sensing subscriber may be understood as a consumer or a user of a sensing service, that is, a party that requests to use or obtain the sensing service, for example, may be an operator, a client, or a server. An SDPF may be understood as a provider of a sensing service, that is, a party that provides a sensing result of the sensing service for a sensing subscriber. A sensing entity may be understood as a producer of a sensing service, that is, a party that can provide sensing data of the sensing service for the SDPF, for example, provide raw data and/or measurement data. The SSCF may be understood as a party that controls the SDPF to provide a sensing result.

The subscription request message is used to request to subscribe to a type of sensing service. When receiving the subscription request message, the SSCF may generate a sensing service identifier to identify a specific sensing service that is subscribed to. In this embodiment of this application, an example in which the SSCF generates a first sensing service identifier is used. For example, the SSCF may randomly generate the first sensing service identifier, or generate the first sensing service identifier based on content carried in the subscription request message.

In a possible implementation, the subscription request message may include one or more of the following information: an identifier of the sensing subscriber, subscribed area information, a subscribed sensing service type, and subscribed sensing requirement information. Therefore, a sensing control entity may generate, based on the content carried in the subscription request message, the first sensing service identifier corresponding to the content. The first sensing service identifier is used to identify a first sensing service, that is, used to identify a sensing service that the sensing subscriber requests to subscribe to.

The identifier of the sensing subscriber is used to identify the sensing subscriber. The subscribed area information indicates a sensing service/sensing services in which area or areas is/are requested to be subscribed to. The area is a geographical location range divided by an operator based on a deployment location of the sensing entity. The subscribed sensing service type indicates a type of a sensing service that is requested to be subscribed to, and may be classified into a monitoring category, an environment category, an imaging category, a positioning category, and the like. The four categories are major categories, and each category is further refined. For example, the monitoring category may be classified into movement monitoring, intrusion monitoring, fall monitoring, health monitoring (for example, monitoring a breathing frequency and heartbeats), and the movement monitoring may be classified into distance monitoring, location monitoring, movement speed monitoring, movement path monitoring, and the like; the environment category may be classified into an ambient temperature, an ambient humidity, an air quality, a weather condition, a crowd density, a vehicle flow density, atmospheric pressure, and the like; and the imaging category may be classified into medical imaging, 3D map imaging, 3D map construction, building imaging, body temperature imaging, and the like. The subscribed sensing requirement information is used to describe an indicator requirement of a sensing service. The indicator may include but is not limited to one or more of distance precision, resolution, recognition accuracy, a false alarm rate, positioning precision, a delay, and the like. For example, an error of positioning precision is within 10 cm, and recognition accuracy is higher than 90%.

It may be understood that the sensing service type in the subscription request message is coarse-grained, and the sensing service type in the sensing capability information is fine-grained.

In an implementation, the subscription request message may include one or more of the following information elements:
(1) sub_ID: This information element is used to identify the sensing subscriber.
(2) area_list: This information element indicates an area or areas in which a sensing service/sensing services is/are requested to be subscribed to.
(3) service_type: This information element indicates a type of a sensing service requested to be subscribed to.
(4) kpi_list: This information element indicates an indicator requirement of a sensing service.

In an implementation, the sensing subscriber may directly send the subscription request message to the SSCF. In another implementation, the sensing subscriber may send the subscription request message to the SSCF through an NEF.

502: The SSCF generates the first sensing service identifier.

When generating the sensing service identifier, the SSCF avoids generating same sensing service identifiers. Optionally, the SSCF may generate, based on the content carried in the subscription request message, the first sensing service identifier corresponding to the content. In other words, the first sensing service identifier has a binding relationship with at least one of the area information, the sensing service type, and the sensing requirement information in the subscription request message.

503: The SSCF sends a subscription response message to the sensing subscriber. Correspondingly, the sensing subscriber receives the subscription response message from the SSCF.

The subscription response message carries the first sensing service identifier.

Step 501 to step 503 are a sensing service subscription procedure. Similarly, the sensing subscriber may alternatively request the SSCF to deregister the sensing service. For example, the sensing subscriber sends a deregistration request message to the SSCF, where the deregistration request message may carry the first sensing service identifier. If the SSCF agrees to deregister the sensing service, a deregistration acknowledgement message may be fed back to the sensing subscriber.

In an implementation, the SSCF may directly send the subscription response message to the sensing subscriber. In another implementation, the SSCF may send the subscription response message to the sensing subscriber through the NEF.

In the embodiment shown in FIG. 5, the SSCF feeds back the sensing service identifier generated by the SSCF to the sensing subscriber, so that the sensing subscriber requests a corresponding sensing service from the sensing control entity.

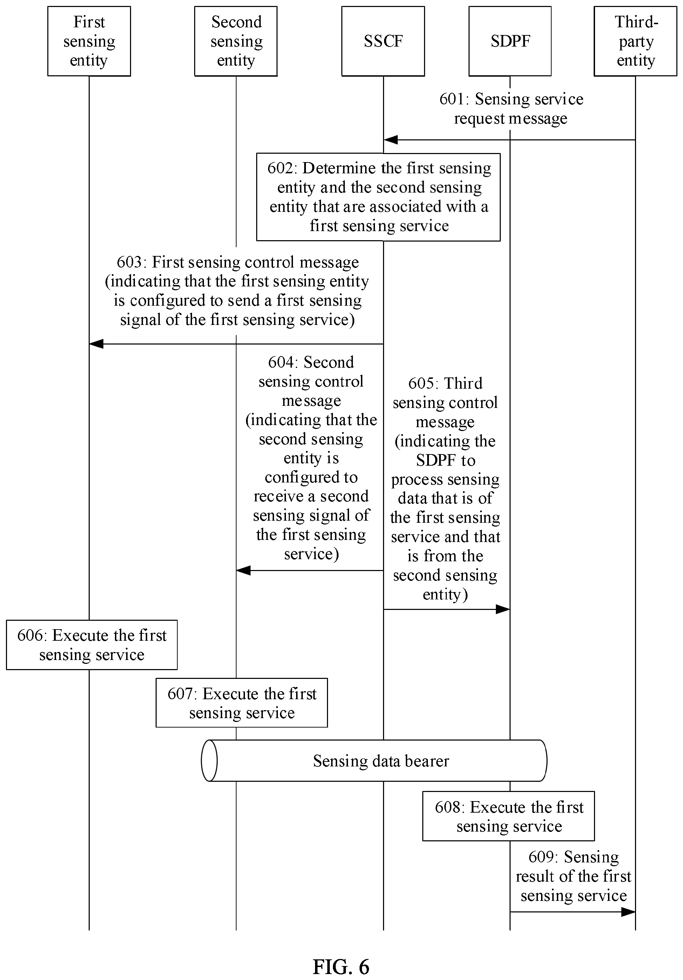

FIG. 6 is a schematic flowchart of a sensing service processing method according to an embodiment of this application. The method may include but is not limited to the following steps.

601: A third-party entity sends a sensing service request message to an SSCF. Correspondingly, the SSCF receives the sensing service request message from the third-party entity.

The third-party entity may be the sensing subscriber in FIG. 5, or may be another entity that requests a sensing service.

In an implementation, the third-party entity may be the sensing subscriber in FIG. 5, and the sensing service request message may include a sensing service identifier, used to identify a sensing service subscribed by the sensing subscriber. In this embodiment of this application, an example in which the sensing subscriber subscribes to a first sensing service is used. In this case, the sensing service request message may include a first sensing service identifier. It may be understood that the sensing service request message is used to request a sensing result of the first sensing service. This implementation is implemented based on a fact that the sensing subscriber has subscribed to the sensing service.

In another implementation, the third-party entity may be an entity that requests the sensing service. The sensing service request message is used to request the sensing result of the first sensing service. The sensing service request message may include one or more of the following information: an identifier of the third-party entity, area information of the first sensing service, a sensing service type of the first sensing service, and sensing requirement information of the first sensing service. The information indicates the sensing service requested by the third-party entity. The identifier of the third-party entity is used to identify the third-party entity. In this implementation, the third-party entity does not subscribe to the sensing service, and directly includes information related to the first sensing service in the sensing service request message.

In an implementation, the third-party entity may directly send the sensing service request message to the SSCF. In another implementation, the third-party entity may send the sensing service request message to the SSCF through an NEF.

Step 601 is a possible manner in which the SSCF obtains the first sensing service identifier. In another possible manner, there is at least one sensing service in the SSCF, and the first sensing service identifier is a sensing service identifier of any one of the at least one sensing service. The SSCF may alternatively obtain the first sensing service identifier in another manner.

602: The SSCF determines a first sensing entity and a second sensing entity that are associated with the first sensing service.

After receiving the first sensing service request message, the SSCF obtains, based on the first sensing service identifier carried in the first sensing service request message, a sensing service type, area information, and sensing requirement information of a sensing service (for example, the first sensing service) subscribed by the third-party entity sensing subscriber, and allocates task IDs of the first sensing service based on the information; or allocates the task IDs of the first sensing service (that is, allocates the task IDs for processing the first sensing service) based on the sensing service type, the area information, and the sensing requirement information that are of the first sensing service and that are carried in the first sensing service request message.

Optionally, the SSCF randomly allocates the task IDs of the first sensing service, provided that task IDs of different sensing services are different.

The SSCF selects, based on sensing capability information of each sensing entity and one or more of the sensing service type, the area information, and the sensing requirement information of the first sensing service, a sending sensing entity and a receiving sensing entity for processing the first sensing service. Herein, one or more sending sensing entities may be selected, and one or more receiving sensing entities may also be selected. A sensing entity that processes a sensing service may be understood as a sensing entity that provides raw data and/or measurement data of the sensing service.

For example, the third-party entity requests a first sensing service in an area 1, a type of the requested first sensing service is movement monitoring, requirement information indicates that an error of positioning precision of the first sensing service is within 10 cm, and current longitude and latitude information of a sensing entity a and a sensing entity b is within a range of the area 1. A role identifier of the sensing entity a is a sending sensing entity, a role identifier of the sensing entity b is a receiving sensing entity, and both the sensing entity a and the sensing entity b can support movement information monitoring of a movement target. In this case, the SSCF may select the sensing entity a as the sending sensing entity for processing the first sensing service, and select the sensing entity b as the receiving sensing entity for processing the first sensing service.

Optionally, when allocating the task IDs for processing the first sensing service or after allocating the task IDs for processing the first sensing service, the SSCF allocates subtask IDs. In other words, a large task for processing the first sensing service is divided into a plurality of subtasks for processing the first sensing service. When selecting the sending sensing entity and the receiving sensing entity, the SSCF selects several pairs of sensing entities, where one pair of sensing entities is used to process one subtask. After allocating the subtask IDs and selecting several pairs of sensing entities, the SSCF establishes a correspondence between a subtask ID and a sensing entity pair.

In this embodiment of this application, for example, the first sensing entity is the sending sensing entity, the second sensing entity is the receiving sensing entity, and the first sensing entity and the second sensing entity process a first subtask of the first sensing service.

603: The SSCF sends a first sensing control message to the first sensing entity. Correspondingly, the first sensing entity receives the first sensing control message from the SSCF.

The first sensing control message includes first indication information, and the first indication information indicates the first sensing entity to send a first sensing signal of the first sensing service. For example, the first indication information indicates the first sensing entity to send the first sensing signal to an object (for example, a vehicle or an internet of things device) in a geographical location range that can be sensed by the first sensing entity.

In a possible implementation, the first sensing control message further includes one or more of the following information: the first sensing service identifier, the sensing service type of the first sensing service, and the sensing requirement information of the first sensing service. The sensing service type of the first sensing service may be the same as a sensing service type in a subscription request message, or may be a further refined sensing service type. The sensing requirement information of the first sensing service may be the same as sensing requirement information in the subscription request message.

In a possible implementation, the first sensing control message further includes a first subtask identifier, so that the first sensing entity learns of which subtask in the first sensing service is processed, and then the first sensing entity may send a sensing signal of the subtask. Alternatively, the first sensing control message further includes an identifier of a task for processing the first sensing service and the first subtask identifier, so that the first sensing entity learns of which subtask in a sensing service is processed.

604: The SSCF sends a second sensing control message to the second sensing entity. Correspondingly, the second sensing entity receives the second sensing control message from the SSCF.

The second sensing control message includes second indication information, and the second indication information indicates that the second sensing entity is configured to receive a second sensing signal of the first sensing service. For example, the second indication information indicates the second sensing entity to sense a second sensing signal reflected by a target object. The second sensing signal may be understood as a reflected signal of the first sensing signal.

In a possible implementation, the second sensing control message further includes one or more of the following information: the first sensing service identifier, the sensing service type of the first sensing service, and the sensing requirement information of the first sensing service.

In a possible implementation, the second sensing control message further includes the first subtask identifier, so that the second sensing entity learns of which subtask in the first sensing service is processed, and the first sensing entity may receive a sensing signal of the subtask. Alternatively, the second sensing control message further includes the identifier of the task for processing the first sensing service and the first subtask identifier, so that the second sensing entity learns of which subtask in a sensing service is processed.

In a possible implementation, the second sensing control message further indicates the second sensing entity to perform layer 2 sensing processing and/or layer 3 sensing processing on the first subtask.

605: The SSCF sends a third sensing control message to an SDPF. Correspondingly, the SDPF receives the third sensing control message from the SSCF.

The third sensing control message indicates the SDPF to process sensing data that is of the first sensing service and that is from the second sensing entity.

In a possible implementation, the third sensing control message further indicates one or more of the following information: the first sensing service identifier, the sensing service type of the first sensing service, the sensing requirement information of the first sensing service, and the identifier of the task for processing the first sensing service.

In a possible implementation, the third sensing control message further indicates an identifier of each subtask for processing the first sensing service, so that the SDPF processes sensing data of at least one subtask, to obtain a sensing result of the first sensing service.

In a possible implementation, the third sensing control message further indicates the SDPF to perform L2 sensing processing and/or L3 sensing processing. Optionally, the third sensing control message further indicates an identifier of a subtask for performing L2 sensing processing and/or an identifier of a subtask for performing L3 sensing processing, so that the SDPF may use different processing manners for different subtasks. For example, the third sensing control message indicates the SDPF to perform L2 sensing processing on the first subtask, and indicates the SDPF to perform L3 sensing processing on the second subtask.

In this embodiment of this application, a sequence of performing step 603 to step 605 is not limited.

606: The first sensing entity executes the first sensing service.

After receiving the first sensing control message, the first sensing entity executes the first sensing service. Executing the first sensing service may be specifically executing the first subtask of the first sensing service, for example, sending the first sensing signal of the first subtask.

607: The second sensing entity executes the first sensing service.

After receiving the second sensing control message, the second sensing entity executes the first sensing service. Executing the first sensing service may be specifically executing the first subtask of the first sensing service, for example, may include: receiving the second sensing signal of the first subtask; and establishing a sensing data bearer with the SDPF, and sending sensing data and/or a sensing result of the first subtask to the SDPF through the established sensing data bearer.

If the second sensing entity has a layer 1 sensing processing capability, the second sensing entity obtains information such as a phase and an amplitude of the second sensing signal, to obtain raw data of the first subtask, and may further send the raw data of the first subtask to the SDPF through the sensing data bearer.

If the second sensing entity has the layer 1 sensing processing capability and a layer 2 sensing processing capability, the second sensing entity may obtain the raw data of the first subtask through the received second sensing signal, process the raw data of the first subtask to obtain measurement data of the first subtask, and then send the measurement data of the first subtask to the SDPF through the sensing data bearer.

If the second sensing entity has the layer 1 sensing processing capability, the layer 2 sensing processing capability, and a layer 3 sensing processing capability, the second sensing entity may obtain the raw data of the first subtask through the received second sensing signal, and may further send the raw data of the first subtask to the SDPF through the sensing data bearer. Alternatively, the second sensing entity may obtain the raw data of the first subtask through the received second sensing signal, process the raw data of the first subtask to obtain the measurement data of the first subtask, and then send the measurement data of the first subtask to the SDPF through the sensing data bearer. Alternatively, the second sensing entity may obtain the raw data of the first subtask through the received second sensing signal, process the raw data of the first subtask to obtain the measurement data of the first subtask, process the measurement data of the first subtask to obtain the sensing result of the first subtask, and then send the sensing result of the first subtask to the SDPF through the sensing data bearer.

When the second sensing entity has the layer 1 sensing processing capability, the layer 2 sensing processing capability, and the layer 3 sensing processing capability, the second sensing control message may further indicate whether the second sensing entity performs sensing processing on the first subtask. If the second sensing control message indicates to perform sensing processing on the first subtask, the second sensing control message may further indicate to perform at least one of layer 1 sensing processing, layer 2 sensing processing, and layer 3 sensing processing. For example, the second sensing control message indicates the second sensing entity to perform layer 1 sensing processing and layer 2 sensing processing on the first subtask, and the third sensing control message may indicate the SDPF to perform layer 3 sensing processing on the first subtask. In other words, that the second sensing control message indicates the second sensing entity to perform sensing processing on a subtask may be complementary to that the third sensing control message indicates the SDPF to perform sensing processing on the subtask.

608: The SDPF executes the first sensing service.

The SDPF receives sensing data and/or sensing results of one or more subtasks from one or more receiving sensing entities through one or more sensing data bearers. In other words, the SDPF may receive sensing data of some subtasks and sensing results of some subtasks.

If the third sensing control message indicates the SDPF to perform L2 processing, the SDPF processes received sensing data (that is, raw data) to obtain a measurement result. The measurement result may be used as a sensing result.

If the third sensing control message indicates the SDPF to perform L3 processing, the SDPF processes received sensing data (that is, raw data and/or measurement data) to obtain a sensing result.

If the third sensing control message indicates an identifier of a subtask for performing L2 processing and/or an identifier of a subtask for performing L3 processing, the SDPF processes sensing data of the subtasks based on the identifier of the subtask for performing L2 processing, to obtain a measurement result; and/or processes sensing data of the subtasks based on the identifier of the subtask for performing L3 processing, to obtain a sensing result.

The SDPF combines sensing results of the subtasks to obtain the sensing result of the first sensing service. How the SDPF specifically combines the sensing results of the subtasks is not limited in embodiments of this application. There may be different combination methods for different types of sensing services. For example, the first sensing service is positioning a target object, a sensing result of each subtask is one longitude and latitude coordinate, and an average value of a plurality of longitude and latitude coordinates is used as the sensing result of the first sensing service.

609: The SDPF sends the sensing result of the first sensing service.

In an implementation, the SDPF directly sends the sensing result of the first sensing service to the third-party entity. In another implementation, the SDPF sends the sensing result of the first sensing service to the third-party entity through the NEF. When the third-party entity sends the sensing service request message, the SDPF feeds back the sensing result of the first sensing service to the third-party entity.

In the embodiment shown in FIG. 6, in a scenario in which there are a large quantity of sensing services in a communication system, the SSCF is used as a control plane entity of the sensing service, and the SDPF is used as a data plane entity of the sensing service, so that the sensing service can be processed. This helps improve processing efficiency of the sensing service.

In an optional embodiment, when the first sensing entity and the second sensing entity are the same, the SSCF needs to send only one sensing control message to the sensing entity. The sensing control message indicates the sensing entity to send the first sensing signal of the first sensing service and receive the second sensing signal of the first sensing service. In this way, sensing signal transmission between the first sensing entity and the second sensing entity is not required, and air interface resources and signaling overheads can be reduced.

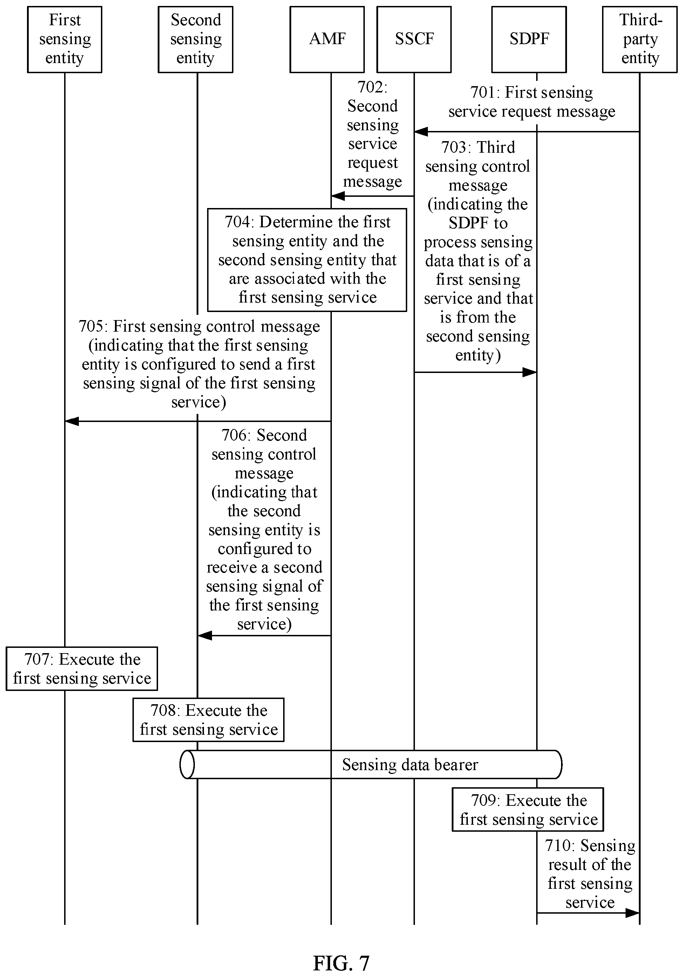

FIG. 7 is a schematic flowchart of another sensing service processing method according to an embodiment of this application. The method may include but is not limited to the following steps.

701: A third-party entity sends a first sensing service request message to an SSCF. Correspondingly, the SSCF receives the first sensing service request message from the third-party entity. For an implementation process of step 701, refer to specific descriptions of step 601 in the embodiment shown in FIG. 6. Details are not described herein again.

702: The SSCF sends a second sensing service request message to an AMF. Correspondingly, the AMF receives the second sensing service request message from the SSCF.

After receiving the first sensing service request message, the SSCF obtains, based on a first sensing service identifier carried in the first sensing service request message, a sensing service type, area information, and sensing requirement information of a sensing service (for example, a first sensing service) subscribed by the third-party entity sensing subscriber, and sends the second sensing service request message to the AMF based on the information; or sends the second sensing service request message to the AMF based on the sensing service type, the area information, and the sensing requirement information of the first sensing service that are carried in the first sensing service request message. The second sensing service request message includes the sensing service type, the area information, and the sensing requirement information of the first sensing service.

In a possible implementation, the SSCF may allocate task IDs of the first sensing service, and the second sensing service request message may further include the task IDs of the first sensing service.

In a possible implementation, the SSCF may further allocate subtask IDs, and the second sensing service request message may further include a subtask ID of each subtask.

703: The SSCF sends a third sensing control message to an SDPF. Correspondingly, the SDPF receives the third sensing control message from the SSCF.

The third sensing control message indicates the SDPF to process sensing data that is of the first sensing service and that is from a second sensing entity.

In a possible implementation, the third sensing control message further indicates one or more of the following information: the first sensing service identifier, the sensing service type of the first sensing service, the sensing requirement information of the first sensing service, and an ID of a task for processing the first sensing service.

In a possible implementation, the third sensing control message further indicates an identifier of each subtask for processing the first sensing service, so that the SDPF processes sensing data of at least one subtask, to obtain a sensing result of the first sensing service.

In a possible implementation, the third sensing control message further indicates the SDPF to perform L2 processing and/or L3 processing. The third sensing control message indicates the SDPF to perform L2 processing, indicating that the sensing entity has an L1 sensing processing capability. The third sensing control message indicates the SDPF to perform L3 processing, indicating that the sensing entity has the L1 sensing processing capability and an L2 sensing processing capability. Optionally, the third sensing control message further indicates an identifier of a subtask for performing L2 processing and/or an identifier of a subtask for performing L3 processing, so that the SDPF may use different processing manners for different subtasks.

704: The AMF determines a first sensing entity and a second sensing entity that are associated with the first sensing service.

When receiving the second sensing service request message, the SSCF selects, based on the sensing service type, the area information, and the sensing requirement information of the first sensing service that are carried in the second sensing service request message, and stored sensing capability information of each sensing entity, a sending sensing entity and a receiving sensing entity that are used to process the first sensing service.

Optionally, the second sensing service request message further includes the task ID and the subtask ID of the first sensing service. When selecting the sending sensing entity and the receiving sensing entity, the AMF selects at least one pair of sensing entities, where the pair of sensing entities is used to process one subtask. The AMF establishes a correspondence between a subtask ID and a sensing entity pair.

705: The AMF sends a first sensing control message to the first sensing entity. Correspondingly, the first sensing entity receives the first sensing control message from the AMF. For content carried in the first sensing control message, refer to specific descriptions of the first sensing control message in the embodiment shown in FIG. 6. Details are not described herein again.

706: The AMF sends a second sensing control message to the second sensing entity. Correspondingly, the second sensing entity receives the second sensing control message from the AMF. For content carried in the second sensing control message, refer to specific descriptions of the second sensing control message in the embodiment shown in FIG. 6. Details are not described herein again.

707: The first sensing entity executes the first sensing service.

708: The second sensing entity executes the first sensing service.

709: The SDPF executes the first sensing service.

710: The SDPF sends the sensing result of the first sensing service.

For an implementation process of step 707 to step 710, refer to specific descriptions of step 606 to step 609 in the embodiment shown in FIG. 6. Details are not described herein again.

In the embodiment shown in FIG. 7, in a scenario in which there are a large quantity of sensing services in a communication system, the SSCF and the AMF are used as control plane entities of the sensing service, and an SDPF is used as a data plane entity of the sensing service, so that the sensing service can be processed. This helps improve processing efficiency of the sensing service.

In an optional embodiment, when the first sensing entity and the second sensing entity are the same, the AMF needs to send only one sensing control message to the sensing entity. The sensing control message indicates the sensing entity to send a first sensing signal of the first sensing service and receive a second sensing signal of the first sensing service. In this way, sensing signal transmission between the first sensing entity and the second sensing entity is not required, and air interface resources and signaling overheads can be reduced.

A difference between the embodiment shown in FIG. 7 and the embodiment shown in FIG. 6 lies in that, the SSCF determines the sensing entity associated with the sensing service in the embodiment shown in FIG. 6, while the AMF determines the sensing entity associated with the sensing service in the embodiment shown in FIG. 7, which is more easily compatible with a 5G system.

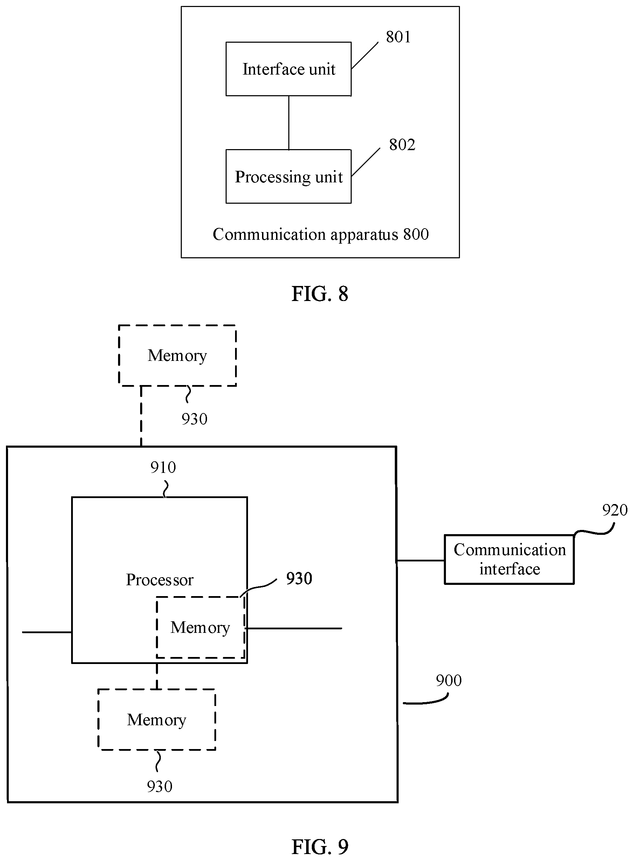

This application provides a communication apparatus, which may be configured to implement functions of the SSCF, the SDPF, the sensing entity, or the AMF. The communication apparatus may be an SSCF, an SDPF, a sensing entity, or an AMF. The communication apparatus includes units that are in a one-to-one correspondence with the methods/operations/steps/actions performed by the SSCF, the SDPF, the sensing entity, or the AMF in the foregoing method embodiments. The units may be implemented by a hardware circuit, software, or a combination of a hardware circuit and software. FIG. 8 is a diagram of a structure of a communication apparatus 800 according to an embodiment of this application. The communication apparatus 800 may include an interface unit 801 and a processing unit 802. Specifically, the processing unit 802 is configured to process signaling and/or data, where the signaling and/or data may be data received by the interface unit 801, and processed signaling and/or data may also be sent by the interface unit 801.

In an implementation, when the communication apparatus 800 is an SSCF,
the interface unit 801 is configured to obtain a first sensing service identifier;
the processing unit 802 is configured to determine a first sensing entity and a second sensing entity that are associated with a first sensing service, where the first sensing service is determined based on the first sensing service identifier; and
the interface unit 801 is further configured to: send a first sensing control message to the first sensing entity, where the first sensing control message includes first indication information, and the first indication information indicates that the first sensing entity is configured to send a first sensing signal of the first sensing service; and send a second sensing control message to the second sensing entity, where the second sensing control message includes second indication information, and the second indication information indicates that the second sensing entity is configured to receive a second sensing signal of the first sensing service.

In this implementation, for specific implementations of the interface unit 801 and the processing unit 802, refer to specific implementation steps of the SSCF in FIG. 6. Details are not described herein again.

In another implementation, when the communication apparatus shown in FIG. 8 is an AMF,
the interface unit 801 is configured to obtain a first sensing service identifier;
the processing unit 802 is configured to determine a first sensing entity and a second sensing entity that are associated with a first sensing service, where the first sensing service is determined based on the first sensing service identifier; and
the interface unit 801 is further configured to: send a first sensing control message to the first sensing entity, where the first sensing control message includes first indication information, and the first indication information indicates that the first sensing entity is configured to send a first sensing signal of the first sensing service; and send a second sensing control message to the second sensing entity, where the second sensing control message includes second indication information, and the second indication information indicates that the second sensing entity is configured to receive a second sensing signal of the first sensing service.

In this implementation, for specific implementations of the interface unit 801 and the processing unit 802, refer to specific implementation steps of the AMF in FIG. 7. Details are not described herein again.

In still another implementation, when the communication apparatus shown in FIG. 8 is an SDPF,
the interface unit 801 is configured to: receive a third sensing control message from a sensing control entity, where the third sensing control message indicates to process sensing data of the first sensing service; and receive the sensing data of the first sensing service; and
the processing unit 802 is configured to: obtain a sensing result of the first sensing service based on the sensing data of the first sensing service, and send the sensing result of the first sensing service.

In this implementation, for specific implementations of the interface unit 801 and the processing unit 802, refer to specific implementation steps of the SDPF in FIG. 6 or FIG. 7. Details are not described herein again.

In still another implementation, when the communication apparatus shown in FIG. 8 is a sensing entity,
the interface unit 801 is configured to receive a first sensing control message and/or a second sensing control message, where the first sensing control message indicates to send a first sensing signal of the first sensing service, and the second sensing control message indicates to receive a second sensing signal of the first sensing service; and
the processing unit 802 is configured to: send the first sensing signal based on the first sensing control message; and/or receive the second sensing signal based on the second sensing control message.

In this implementation, for specific implementations of the interface unit 801 and the processing unit 802, refer to specific implementation steps of the first sensing entity and the second sensing entity in FIG. 6 or FIG. 7. Details are not described herein again.

FIG. 9 shows a communication apparatus 900 according to an embodiment of this application. The communication apparatus 900 is configured to implement a function of the SSCF, the SDPF, the sensing entity, or the AMF. The apparatus may be a communication device or an apparatus used in a communication device. The communication device may be an SSCF, an SDPF, a sensing entity, or an AMF. The apparatus used in the communication device may be a chip system or a chip in the communication device. The chip system may include a chip, or may include a chip and another discrete component.

The communication apparatus 900 includes at least one processor 910, configured to implement a processing function of a device (for example, an SSCF, an SDPF, a sensing entity, or an AMF) in the method provided in embodiments of this application. The communication apparatus 900 may further include a communication interface 920, configured to implement receiving and sending operations of a device (for example, an SSCF, an SDPF, a sensing entity, or an AMF) in the method provided in embodiments of this application. In embodiments of this application, the communication interface may be a transceiver, a circuit, a bus, a module, or another type of communication interface, and is configured to communicate with another device through a transmission medium. For example, the communication interface 920 is used by an apparatus in the communication apparatus 900 to communicate with another device. The processor 910 receives and sends data through the communication interface 920, and is configured to implement the method in the foregoing method embodiments.

The communication apparatus 900 may further include at least one memory 930, configured to store program instructions and/or data. The memory 930 is coupled to the processor 910. The coupling in embodiments of this application may be an indirect coupling or a communication connection between apparatuses, units, or modules in an electrical form, a mechanical form, or another form, and is used for information exchange between the apparatuses, the units, or the modules. The processor 910 may operate cooperatively with the memory 930. The processor 910 may execute the program instructions stored in the memory 930. At least one of the at least one memory may be included in the processor.

A specific connection medium between the communication interface 920, the processor 910, and the memory 930 is not limited in embodiments of this application. In an embodiment of this application, in FIG. 9, the memory 930, the processor 910, and the communication interface 920 are connected through a bus, and the bus is represented using a thick line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

When the communication apparatus 900 is specifically an apparatus used in a device (for example, an SSCF, an SDPF, a sensing entity, or an AMF), for example, when the communication apparatus 900 is specifically a chip or a chip system, the communication interface 920 may output or receive a baseband signal. When the communication apparatus 900 is specifically a device (for example, a sensing entity), the communication interface 920 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

It should be noted that the communication interface 920 may be configured to perform a function of the interface unit 801, and the processor 910 may be configured to perform a function of the processing unit 802. Details are not described herein again.

When the communication apparatus is a chip used in the SSCF, the chip implements a function of the SSCF in the foregoing method embodiments, and the chip receives information from another device, or the chip sends information to another device.

When the foregoing communication apparatus is a chip used in the SDPF, the chip implements a function of the SDPF in the foregoing method embodiments. The chip receives information from another device, or the chip sends information to another device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may alternatively exist in the terminal or the access network device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape, may be an optical medium, or may be a semiconductor medium, for example, a solid state drive (solid state drive, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

An embodiment of this application further provides a computer-readable storage medium. The computer-readable storage medium stores computer-executable instructions. When the computer-executable instructions are executed, the method performed by the SSCF module, the SDPF module, the sensing entity, or the AMF module in the foregoing method embodiments is implemented.

An embodiment of this application further provides a computer program product. The computer program product includes a computer program. When the computer program is executed, the method performed by the SSCF module, the SDPF module, the sensing entity, or the AMF module in the foregoing method embodiments is implemented.

An embodiment of this application further provides a communication system. The communication system includes an SSCF module, an SDPF module, a sensing entity, and an AMF module. The modules are configured to perform the methods performed by the modules in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The descriptions of the embodiments provided in this application may refer to each other, and the descriptions of the embodiments have different focuses. For a part not described in detail in an embodiment, refer to the related descriptions in another embodiment. For ease of description and brevity, for example, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that the technical solutions described in the foregoing embodiments may still be modified, or some or all technical features thereof may be equivalently replaced, without departing from the scope of the technical solutions of embodiments of this application.

## Claims

1. A sensing service processing method, wherein the method comprises:
obtaining a first sensing service identifier;
determining a first sensing entity and a second sensing entity that are associated with a first sensing service, wherein the first sensing service is determined based on the first sensing service identifier;
sending a first sensing control message to the first sensing entity, wherein the first sensing control message comprises first indication information, and the first indication information indicates that the first sensing entity is configured to send a first sensing signal of the first sensing service; and
sending a second sensing control message to the second sensing entity, wherein the second sensing control message comprises second indication information, and the second indication information indicates that the second sensing entity is configured to receive a second sensing signal of the first sensing service.

2. The method according to claim 1, wherein the method further comprises:
sending a third sensing control message to a sensing processing entity, wherein the third sensing control message indicates the sensing processing entity to process sensing data that is of the first sensing service and that is from the second sensing entity.

3. The method according to claim 1 or 2, wherein before the determining the first sensing entity and the second sensing entity that are associated with the first sensing service, the method further comprises:
receiving sensing capability information of the first sensing entity; and/or
receiving sensing capability information of the second sensing entity.

4. The method according to claim 3, wherein the method further comprises:
sending the sensing capability information of the first sensing entity and/or the sensing capability information of the second sensing entity to a sensing control entity.

5. The method according to claim 3 or 4, wherein the sensing capability information comprises one or more of the following information: a device identifier, a role identifier, a device type, geographical location information, a sensing processing capability, and a supported sensing service type.

6. The method according to claim 5, wherein the sensing processing capability comprises one or more of the following capabilities: a layer 1 sensing capability, a layer 2 sensing capability, and a layer 3 sensing capability, the layer 1 sensing capability is used to sense raw data, the layer 2 sensing capability is used to sense measurement data, the layer 3 sensing capability is used to process sensing data to obtain a sensing result, and the sensing data comprises the raw data and/or the measurement data.

7. The method according to any one of claims 1 to 6, wherein the first sensing entity is the same as or different from the second sensing entity.

8. The method according to any one of claims 1 to 7, wherein the method further comprises:
receiving a subscription request message from a sensing subscriber;
generating the first sensing service identifier based on the subscription request message; and
sending a subscription response message to the sensing subscriber, wherein the subscription response message comprises the first sensing service identifier.

9. The method according to claim 8, wherein the subscription request message comprises one or more of the following information: an identifier of the sensing subscriber, subscribed area information, a subscribed sensing service type, and subscribed sensing requirement information.

10. The method according to any one of claims 1 to 9, wherein the first sensing control message further comprises one or more of the following information: the first sensing service identifier, a sensing service type of the first sensing service, and sensing requirement information of the first sensing service; and the second sensing control message further comprises one or more of the following information: the first sensing service identifier, the sensing service type of the first sensing service, and the sensing requirement information of the first sensing service.

11. The method according to any one of claims 2 to 10, wherein
the first sensing entity and the second sensing entity are associated with a first subtask for processing the first sensing service, wherein the first subtask is any subtask in at least one subtask for processing the first sensing service.

12. The method according to claim 11, wherein the first sensing control message further comprises a first subtask identifier, the second sensing control message further comprises the first subtask identifier, the third sensing control message further indicates an identifier of the at least one subtask, and the first subtask identifier is used to identify the first subtask.

13. A sensing service processing method, wherein the method comprises:
receiving a third sensing control message from a sensing control entity, wherein the third sensing control message indicates to process sensing data of a first sensing service;
receiving the sensing data of the first sensing service;
obtaining a sensing result of the first sensing service based on the sensing data of the first sensing service; and
sending the sensing result of the first sensing service.

14. The method according to claim 13, wherein the sending the sensing result of the first sensing service comprises:
sending, using a network exposure module, the sensing result of the first sensing service to a sensing subscriber of the first sensing service.

15. The method according to claim 13 or 14, wherein the receiving the sensing data of the first sensing service comprises:
receiving the sensing data of the first sensing service through a sensing data bearer.

16. A sensing service processing method, wherein the method comprises:
receiving a first sensing control message and/or a second sensing control message, wherein the first sensing control message indicates to send a first sensing signal of a first sensing service, and the second sensing control message indicates to receive a second sensing signal of the first sensing service; and
sending the first sensing signal based on the first sensing control message; and/or receiving the second sensing signal based on the second sensing control message.

17. The method according to claim 16, wherein before the receiving the first sensing control message and/or the second sensing control message, the method further comprises:
sending sensing capability information.

18. The method according to claim 17, wherein the sensing capability information comprises one or more of the following information: a device identifier, a role identifier, a device type, geographical location information, a sensing processing capability, and a supported sensing service type.

19. The method according to claim 18, wherein the sensing processing capability comprises one or more of the following capabilities: a layer 1 sensing capability, a layer 2 sensing capability, and a layer 3 sensing capability, the layer 1 sensing capability is used to sense raw data, the layer 2 sensing capability is used to sense measurement data, the layer 3 sensing capability is used to process sensing data to obtain a sensing result, and the sensing data comprises the raw data and/or the measurement data.

20. A communication apparatus, comprising a module configured to perform the method according to any one of claims 1 to 12.

21. A communication apparatus, comprising a module configured to perform the method according to any one of claims 13 to 15.

22. A communication apparatus, comprising a module configured to perform the method according to any one of claims 16 to 19.

23. A communication apparatus, comprising a processor, wherein the processor is configured to implement, through a logic circuit and/or by executing a computer program or instructions, so that the method according to any one of claims 1 to 12, the method according to any one of claims 13 to 15, or the method according to any one of claims 16 to 19 is performed.

24. The communication apparatus according to claim 23, further comprising a memory, configured to store the computer program or instructions.

25. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement, through a logic circuit or by executing code instructions, the method according to any one of claims 1 to 12, the method according to any one of claims 13 to 15, or the method according to any one of claims 16 to 19.

26. A computer-readable storage medium, wherein the storage medium stores a computer program or instructions, and when the computer program or the instructions are executed by a communication apparatus, the method according to any one of claims 1 to 12, the method according to any one of claims 13 to 15, or the method according to any one of claims 16 to 19 is performed.

27. A computer program product, comprising computer program code, wherein when the computer program code is run, the method according to any one of claims 1 to 12, the method according to any one of claims 13 to 15, or the method according to any one of claims 16 to 19 is performed.

28. A communication system, comprising an apparatus configured to perform the method according to any one of claims 1 to 12, and an apparatus configured to perform the method according to any one of claims 13 to 15.

29. The communication system according to claim 28, further comprising an apparatus configured to perform the method according to any one of claims 16 to 19.
